# EUROPÄISCHE PATENTANMELDUNG

(11) **EP 1 096 754 A1**
(43) Veröffentlichungstag der Anmeldung: **02.05.2001**
(21) Anmeldenummer: 99121373.7
(22) Anmeldetag: 27.10.1999
(51) Int. Cl.: H04L 29/06

(54) **Verfahren zur Vermeidung von Originalitätskonflikten bei Datentransaktionsvorgängen**

(71) Anmelder: Abit AG, 48668 Meerbusch-Lank (DE)
(72) Erfinder: Vasters, Clemens Friedrich, 41189 Mönchengladbach (DE)
(74) Vertreter: Stenger, Watzke & Ring Patentanwälte

(57) **Zusammenfassung**

Um bei einem Datentransaktionsverfahren Probleme der Isolation und der Konsistenz auszuräumen, wird mit der Erfindung vorgeschlagen ein Verfahren zur Vermeidung von Originalitätskonflikten bei Datentransaktionsvorgängen zwischen einem Basisrechner und einer Arbeitsstation, bei denen der Basisrechner keine über die für die Datenanfrage und Datenabgabe erforderlichen Zustands- oder Verbindungsinformationen hinausgehende Informationen vorhält, wobei der Basisrechner aufgrund einer von einer Arbeitsstation stammenden Anfrage alle für die Bearbeitung erforderlichen Ressourcen reserviert, daraus die Rohdaten beschafft und zu einem ersten Datenblock zusammenstellt, alle relevanten Zustandsinformationen zu einem zweiten Datenblock zusammenstellt, die ersten und zweiten Datenblöcke für die Arbeitsstation verfügbar absendet und die reservierten Ressourcen abschließend freigibt.

## Beschreibung

Die vorliegende Erfindung betrifft ein Verfahren zur Vermeidung von Originalitätskonflikten bei Datentransaktionsvorgängen zwischen einem Basisrechner und einer Arbeitsstation, bei denen der Basisrechner keine über die für die Datenanfrage und Datenabgabe erforderlichen Zustands- oder Verbindungsinformationen hinausgehende Informationen vorhält.

Die Erfindung bezieht sich auf Systeme, bei denen Arbeitsstationen, sogenannten Clients, mit Basisrechnern, sogenannten Hostcomputern, oder Servern, kommunizieren. Dabei gibt es permanent verbundene Systeme, beispielsweise Rechnernetze, oder auch nicht permanent verbundene Systeme, beispielsweise unter Nutzung von Datenfernübertragung, z. B. im Internet, World Wide Web, und dergleichen.

Bei all diesen Systemen werden unter anderem Verfahren angewandt, bei denen bei Anfragen an einen Server Requestsätze gesendet werden und der Server darauf hin die jeweils angefragte Ressource lokalisiert, also Dateien öffnet, Datenbanken anspricht und dergleichen. Der Server leitet alle notwendigen Maßnahmen zur Beschaffung der angeforderten Antwort selbst ein; auch einschließlich der Aufrufe externer Programme und dergleichen. Er sammelt die Ergebnisse in Form eines Datenstroms und sendet diese dem Anfragenden zurück. Nur während der Sendung der Anfrage und der Übermittlung der Ergebnisse besteht zwischen dem Server und dem Client eine direkte Verbindung. Zu allen anderen Zeiten besteht technisch keine Verbindung zwischen den Kommunikationspartnern. Dies ist auch in permanent verkabelten Netzen der Fall, bei denen das genannte Verfahren angewandt wird.

Bei derartigen Verfahren werden Kommunikationsprotokolle angewandt, von denen ein bekanntes das sogenannten HTTP-Protokoll ist. Es handelt sich um ein sogenanntes verbindungsloses Protokoll.

Bei allen HTTP-Softwareapplikationen, vergleichbaren Applikationen mit der beschriebenen nicht permanenten Verbindung oder Applikationen in permanent verkabelten Systemen, bei denen jedoch der Server zwischen Anfragen des Client und Antworten über die reinen verbindungsrelevanten Informationen hinaus keine Zustandsinformationen vorhält, kann es zu einer Reihe von Problemen kommen. Eine Vielzahl von derartigen Applikationen, insbesondere HTTP-Applikationen, d. h. Programme, die vom HTTP-Server selbst ausgeführt werden, liefern in der Regel Daten aus einer Datenquelle an den Client, die dort zur Bearbeitung angezeigt werden oder anderweitig zur Bearbeitung oder Weiterverarbeitung dienen. Einfachste Anfragen umfassen das einfache Anzeigen von Daten, Anwendungen umfassen die Einleitung von Bearbeitungen unter Nutzung der Daten und es gibt auch Vorgänge der Datenveränderung und Rückschreibung auf den Server, also Aktualisierungsverfahren.

Aus Sicht beispielsweise eines HTTP-Servers ist die Bereitstellung der Daten für die Bearbeitung bzw. Weiterverarbeitung und die Rücknahme der Bearbeitungs- bzw. Verarbeitungsergebnisse vollständig entkoppelt. Die Applikation kann aufgrund der Tatsache, daß qua Kommunikationsprotokoll oder qua Architektur nie eine permanente Verbindung zum Client besteht, nicht feststellen und auch keine Annahme treffen, ob und wann das Ergebnis der Bearbeitung eintrifft.

Des weiteren besteht aufgrund des üblichen Einsatzszenario von HTTP-Servern die Notwendigkeit, gemeinsam von allen Prozessen genutzte Ressourcen wie Datenbankverbindungen und Arbeitsspeicher nur so kurz wie möglich festzuhalten. Dies gilt ganz besonders und im Speziellen für Datenbanksperren, weil diese andernfalls dazu führen, daß ganze Regionen von Datenbanken über lange Zeiträume gesperrt würden und im Effekt durch Kaskadierung die gesamte Applikation bis zu der Freigabe der Sperren zum Stillstand bringen würden.

Aus diesen Gründen werden bei HTTP-Applikationen die Daten zur Beschaffung ohne weitere Vorkehrungen aus der Datenquelle gelesene und an den Client gesendet. Nach der Verarbeitung werden die korrekten Datensenken nach einem applikationsspezifischen Mechanismus reidentifiziert und die Daten ebenfalls ohne weitere Vorkehrungen auf die Datensenken appliziert.

Dieses Vorgehen, obwohl übliche Vorgehensweise, verletzt bei der in der Regel gegebenen Identität von Datenquelle und Datensenke zwei Grundprinzipien der Transaktionsverarbeitung: Isolation und Konsistenz.

Des handelt sich bei der dargestellten einfachen Sequenz Datenbeschaffung-> Bearbeitung->Datenablage um eine typische atomare und persistente Transaktion, die von anderen Transaktionen zu isolieren ist und das System von einem konsistenten Zustand A in den nächsten Zustand B zu überführen hat. Es ist hierbei irrelevant, ob der Prozessor eine Maschine oder eine Person ist. Das gleiche gilt für Transaktionsketten der Form Datenbeschaffung->Bearbeitung->Zwischenablage/Datenbeschaffung->Bearbeitung->Datenablage.

In anderen Worten kommt es zu Vorgängen durch zeitliche Verschachtelung verschiedener Bearbeitungen. Wird von einem Client A zu einem ersten Zeitpunkt eine Anfrage gestartet und zu einem zweiten Zeitpunkt werden von diesem Client Daten zurückgeschrieben, kann es vorkommen, daß zwischen dem ersten und dem zweiten Zeitpunkt eine Anfrage und ein Rückschreibvorgang eines anderen Client stattgefunden haben. Auch Ineinanderverschachtelungen sind natürlich denkbar. Somit kommt es dazu, daß in unkontrollierter Weise bereits geänderte Daten überschrieben werden oder die Überschreibung nicht mehr die aktuelle Datenbasis trifft. Man spricht in diesem Fall von einem Konsistenzproblem.

Ein weiterer Problembereich ergibt sich daraus, daß ein Client von einem Server Daten abfragt und mit diesen in Verarbeitungen eintritt. Werden dann Verarbeitungsergebnisse unter Nutzung von Originaldaten zu Resultaten verarbeitet, greift der Client automatisch wieder auf die Serverdaten zurück. Hierbei kann es nun vorkommen, daß die aktuellen Serverdaten nicht mehr mit den ursprünglichen Serverdaten übereinstimmen, das erlangte Resultat also nicht mehr erreichbar ist. Man spricht in diesem Fall von einem Isolationsproblem.

Die Datenbeschaffungskomponente der Transaktion ist mithin verpflichtet, die Daten geeignet durch Setzen von Sperren gegen konkurrierenden Zugriff zu schützen oder andere Vorkehrungen zu treffen, die einem solchen Schutz äquivalent sind.

Der Datenablagekomponente ist es verboten, Datensätze zu modifizieren, die nicht bei der Datenbeschaffung gesperrt wurden, weil dies dazu führen kann, daß Daten konkurrierender und/oder zeitlich überdeckter Transaktionen überschrieben werden können. Die Datenablagekomponente darf Datensätze selbständig modifizieren, wenn sie sicherstellen kann, daß die gleichen Sätze nicht im Rahmen der Datenbeschaffung eine unmittelbare oder mittelbare Funktion hatten.

Daten, die innerhalb einer Transaktionskette zur Zwischenablage, Validierung, Berechnung und/oder zusätzlicher Datenbeschaffung wieder an den Server gelangen, müssen von anderen Transaktionen isoliert sein. Zwischenergebnisse dieser Form dürfen nicht für andere Transaktionen sichtbar sein, d. h. es müssen hier ebenfalls Sperren gesetzt werden oder andere, äquivalente Vorkehrungen getroffen werden, die eine Isolation gewährleisten.

Diese drei Regeln werden bei den gängigen HTTP-Applikationen durchgängig verletzt. Mithin sind HTTP-Applikationen nicht in der Lage, formal konsistente und isolierte Transaktionsverarbeitung zu gewährleisten.

Ein Beispiel für ein Isolationsproblem mag eine klassische Kreditberatung sein. Der Client greift auf die im Server abgelegten Daten bezüglich der Kreditkonditionen zurück und errechnet entsprechende Kreditbeispiele. Hat er sich nun zu irgendeinem Zeitpunkt zu einer vertraglichen Abwicklung entschlossen, greift der Client wieder auf Serverdaten zurück, um diese in eine entsprechende Applikation zu überführen. In der Zwischenzeit können jedoch die Basisdaten verändert worden sein, so daß Angebot und Ergebnis nicht mehr übereinstimmen würden.

Ausgehend vom vorbeschriebenen Stand der Technik liegt der vorliegenden Erfindung die **Aufgabe** zugrunde, ein Verfahren für den beschriebenen Transaktionsanwendungsbereich bereitzustellen, bei dem Isolationsprobleme praktisch ausgeschlossen sind. Darüber hinaus ist es wünschenswert, auch Konsistenzprobleme auszuschließen.

Zur technischen **Lösung** dieser Aufgabe wird mit der Erfindung vorgeschlagen ein Verfahren zur Vermeidung von Originalitätskonflikten bei Datentransaktionsvorgängen zwischen einem Basisrechner und einer Arbeitsstation, bei denen der Basisrechner keine über die für die Datenanfrage und Datenabgabe erforderlichen Zustands- oder Verbindungsinformationen hinausgehende Informationen vorhält, wobei der Basisrechner aufgrund einer von einer Arbeitsstation stammenden Anfrage alle für die Bearbeitung erforderlichen Ressourcen reserviert, daraus die Rohdaten beschafft und zu einem ersten Datenblock zusammenstellt, alle relevanten Zustandsinformationen zu einem zweiten Datenblock zusammenstellt, die ersten und zweiten Datenblöcke für die Arbeitsstation verfügbar absendet und die reservierten Ressourcen abschließend freigibt.

Die erfindungsgemäße Lösung besteht darin, daß ein Server aufgrund einer Anfrage die Daten zusammenstellt und zusammen mit den Zustandsinformationen der Datenbeschaffungstransaktion zu Datenblöcken zusammenfaßt und vollständig zur Nutzung durch die Arbeitsstation bereitstellt. Die Datenblöcke können voneinander getrennt oder zusammengefaßt vom Server ausgegeben werden. Man spricht von der Bildung sogenannter Datencontainer, die vom Server erstellt und abgesendet werden. Diese Datencontainer können gemäß einem vorteilhaften Vorschlag der Erfindung direkt zur Arbeitsstation gelangen oder, bei nicht permanent verkabelten Systemen im Übertragungssystem für die Arbeitsstation verfügbar abgelegt werden. Nach dem Ablegen oder Absenden der Datencontainer gibt der Server sämtliche Ressourcen frei.

Von der Arbeitsstation aus kann nun auf einen - nicht notwendig mit dem ersten identischen - Server zugegangen werden, in dem diesem die Datencontainer rückgespielt werden. Er ist nunmehr in der Lage, sowohl die Rohdaten im Urzustand als auch die Zustandsinformationen für die Datenbeschaffungstransaktionen zu rekonstruieren. Dadurch wird sichergestellt, daß während eines Vorgangs der Client immer nur mit den gleichen Daten arbeitet, also nicht wieder die möglicherweise inzwischen veränderten Daten vom Server abfragt. Dadurch ergibt sich eine Lösung des Isolationsproblems, in dem eine Arbeitsstation von einem Zeitpunkt der Abfrage an konsequent immer mit den gleichen, im übermittelten Datencontainer vorhandenen Datensatz arbeitet. Dies ist auch ein zumindest in nicht permanent verkabelten Netzen wirtschaftlicher Vorteil, denn durch das Vermeiden der sogenannten Rereads, also das wieder Zugreifen auf die Datenbestände und das jeweils wieder neue Herstellen der Ressourcenreservierungen kommt es zu einer großen Vielzahl von Übertragungen mit entsprechenden Übertragungsfehlern oder Wiederholungen. Nach dem erfindungsgemäßen Verfahren werden einmal die Daten zusammengestellt und vollständig im Datencontainer übergeben und stehen so dem Client bis zum Abschluß der Bearbeitung zur Verfügung.

Die Datenbeschaffung geschieht in aus dem Stand der Technik bekannter Weise durch Anfrage an den Server, der die entsprechenden Ressourcen erschließt und die Rohdaten beschafft.

Die gelieferten Rohdaten werden unmittelbar nach der Beschaffung unverändert in einen geeigneten Datencontainer gepackt. Dieser Datencontainer kann einen Kompressionsalgorithmus nutzen und kann ein symmetrisches oder asymmetrisches Kryptographieverfahren verwenden. Alternativ kann der Datencontainer auch serverseitig gespeichert werden und eine Referenz darauf an den Client gesendet werden. Gemäß einem vorteilhaften Vorschlag der Erfindung werden die einer Datenbank entnommenen Daten mit einem Versionszähler versehen, welcher bei der Transaktion mit überliefert wird. Wird durch den Client eine Abfrage durchgeführt, stellt der Server die Rohdaten zusammen, vergibt an der Quelle einen Versionszähler und liefert diesen zugleich mit den Rohdaten an den Client weiter. Verändert nun der Client die Daten und will diese zurückschreiben, unternimmt der Server einen Versionsnummernvergleich. Haben inzwischen weitere Veränderungen stattgefunden, stellt der Server fest, daß die rückzuschreibende Datenversion nicht mehr mit der in der Quelle befindlichen Datenversion übereinstimmt. Er bricht daher die Transaktion ab. Der Client beginnt praktisch wieder auf einer neuen Datenbasis.

Alle unmittelbar oder mittelbar aus der Datenbeschaffung resultierenden Zustände der Transaktion, die für die Datenablage relevant sind oder die im Rahmen der Datenablage erneut verwendet werden können/müssen, sind unmittelbar vor Abgabe der Daten an den Client ebenfalls in einen geeigneten Datencontainer gepackt. Dieser Datencontainer kann einen Kompressionsalgorithmus nutzen und kann ein symmetrisches oder asymmetrisches Kryptographieverfahren verwenden. Der Datencontainer kann mit dem oben genannten Container identisch sein. Der Datencontainer wird in geeigneter Form mit der Antwort an den Client weitergegeben. Alternativ dazu kann der Datencontainer in einer geeigneten Ablage im System und mit einer über die Zeit und die Systemsicht eindeutige Referenz versehen werden, die an den Client weitergegeben wird. Dies kann für den HTTP/HTML-Fall ein Textblock mit einem einer Basis-64-Verschlüsselung unterzogenen Binärdatenstrom sein. Der Server gibt unmittelbar nach Abgabe alle für die Transaktion reservierten Ressourcen (Datenbanksperren, Datenbankverbindungen, etc.) frei.

Der Client bearbeitet die Daten oder verarbeitet sie in beliebiger Form und sendet ein Bearbeitungsergebnis an den Server, das zu einer Modifikation der Datenquelle/-senke der zur Beschaffung genutzten Daten führt. Der Client sendet die Verarbeitungsanfrage für die Datenablage zurück an den Server und übermittelt dabei den Datencontainer an den Server zurück. Alternativ wird die Referenz auf den Datencontainer übermittelt, mit deren Hilfe der Datencontainer aus der Ablage entnommen wird. Der Server restauriert nunmehr unter Zuhilfenahme des Daten-containers und vor Eintritt in die Datenablagefunktion
i) den gesamten Zustand der Datenbeschaffungstransaktion,
ii) die Rohdaten bzw. die Rohdatenversion.

Die Datenablagefunktion stellt geeignet sicher, daß Daten oder auch Teile von Daten die aus dem Datencontainer rekonstruiert wurden, auf keinen Fall nochmals aus der Datenquelle beschafft werden. Die Ergebnisse der Client-Bearbeitung/Verarbeitung werden auf den Zustand der Transaktion appliziert. Dies kann ggf. unter Weiterverarbeitung und weiterer Datenbeschaffung geschehen.

Für das Zwischenergebnis einer Transaktionskette: Verfahren setzt sich wiederholend fort. Die Daten werden in diesem Falle an den Client gesendet. Die Daten werden auf die Datensenke appliziert. Hierbei muß entweder für Rohdaten die, wie bereits oben erläutert, gespeichert wurden, die Versionsnummer der Datensätze in der Datensenke den gespeicherten Versionsnummern exakt entsprechen oder für die abgelegten Rohdaten muß Identität zwischen den Sätzen in der Datensenke und in den gespeicherten Daten gelten. Ist eines der Kriterien für irgendeinen Datensatz nicht erfüllt, so wird die Transaktion abgebrochen und alle Ergebnisse verworfen. Für Sätze werden die Versionsnummern beim Schreiben inkrementiert oder anderweitig eindeutig modifiziert.

Durch dieses erfindungsgemäße Verfahren wird Isolation hergestellt, weil
a) keine schreibenden Zugriffe auf die Datensenke bis zum Ende der Transaktion vorgenommen werden
b) ein einzelnes Datum oder ein Datensatz nur garantiert einmal von der Datensenke geladen wird und Ergebnisse anderer Transaktionen keinen Einfluß auf die laufende Transaktion haben kann.
Durch dieses Verfahren wird auch Konsistenz gewährleistet, weil
a) keine Zwischenergebnisse von Transaktionen in der Datensenke abgelegt werden
b) kein Ergebnis von zeitlich vollständig oder teilweise überdeckten, konkurrierenden Transaktionen überschrieben werden kann.

Das erfindungsgemäße Verfahren löst die oben beschriebenen Probleme der Isolation und der Konsistenz auf einfache und auch in bestehende Systeme einfach zu implementierende Weise. Es ergeben sich erhebliche wirtschaftliche Vorteile und es lassen sich auf diese Weise viele zu Schaden führende Fehlerquellen vermeiden.

## Patentansprüche

1. Verfahren zur Vermeidung von Originalitätskonflikten bei Datentransaktionsvorgängen zwischen einem Basisrechner und einer Arbeitsstation, bei denen der Basisrechner keine über die für die Datenanfrage und Datenabgabe erforderlichen Zustands- oder Verbindungsinformationen hinausgehende Informationen vorhält, wobei der Basisrechner aufgrund einer von einer Arbeitsstation stammenden Anfrage alle für die Bearbeitung erforderlichen Ressourcen reserviert, daraus die Rohdaten beschafft und zu einem ersten Datenblock zusammenstellt, alle relevanten Zustandsinformationen zu einem zweiten Datenblock zusammenstellt, die ersten und zweiten Datenblöcke für die Arbeitsstation verfügbar absendet und die reservierten Ressourcen abschließend freigibt.

2. Verfahren nach Anspruch 1, dadurch gekennzeichnet, daß die ersten und zweiten Datenblöcke zu einem integrierten Datenblock zusammengefaßt werden.

3. Verfahren nach einem der vorhergehenden Ansprüche, dadurch gekennzeichnet, daß die Datenblöcke mit einem Kompressionsalgorithmus bearbeitet werden.

4. Verfahren nach einem der vorhergehenden Ansprüche, dadurch gekennzeichnet, daß die Datenblöcke mit einem Kryptographieverfahren bearbeitet werden.

5. Verfahren nach einem der vorhergehenden Ansprüche, dadurch gekennzeichnet, daß die Datenblöcke direkt an die Arbeitsstationen gesendet werden.

6. Verfahren nach einem der Ansprüche 1 bis 4, dadurch gekennzeichnet, daß die Datenblöcke im Kommunikationssystem für die Arbeitsstation erreichbar unter Angabe einer Adresse abgelegt werden.

7. Verfahren nach einem der vorhergehenden Ansprüche, dadurch gekennzeichnet, daß für von der Arbeitsstation angeregte Verarbeitungszwecke auf dem Basisrechner die Rohdaten und die Zustandsinformationen der Datenbeschaffungstransaktionen aus den Datenblöcken rekonstruiert werden.

8. Verfahren nach einem der vorhergehenden Ansprüche, dadurch gekennzeichnet, daß für Datenbestände Versionszähler vergeben werden.

9. Verfahren nach Anspruch 8, dadurch gekennzeichnet, daß bei Datenrückspeicherung ein Versionszählervergleich vorgenommen wird.

10. Verfahren nach einem der vorhergehenden Ansprüche, dadurch gekennzeichnet, daß Datenteilmengen zu Datenblöcken zusammengefaßt werden.
